# EUROPÄISCHE PATENTSCHRIFT

(11) **EP 0 703 241 B1**
(45) Veröffentlichungstag und Bekanntmachung des Hinweises auf die Patenterteilung: **26.07.2000**
(21) Anmeldenummer: 95113970.8
(22) Anmeldetag: 06.09.1995
(51) Int. Cl.: C07F 9/6571

(54) **Verfahren zur Herstellung von 6-Oxo-(6H)-dibenz-(c,e)(1,2)-oxaphosphorinen (ODOP)**
Process for the preparation of 6-oxo-(6H)-dibenz-(c,e)(1,2)-oxaphosphorines (ODOP)
Procédé de préparation de 6-oxo-(6H)-dibenz-(c,e)(1,2)-oxa-phosphorinen (ODOP)

(30) Priorität: 19.09.1994 DE 4433263; 19.09.1994 DE 4433264; 17.02.1995 DE 19505353; 17.02.1995 DE 19505352
(43) Veröffentlichungstag der Anmeldung: 27.03.1996
(73) Patentinhaber: BAYER AG, 51368 Leverkusen (DE)
(72) Erfinder: Buysch, Hans-Josef, Dr., D-47809 Krefeld (DE); Glock, Volker, Dr., D-47800 Krefeld (DE); Griehsel, Bernd, D-46242 Bottrop (DE); Komoschinski, Joachim, Dr., D-51061 Köln (DE)

(56) Entgegenhaltungen:
- EP-A- 0 582 957
- EP-A- 0 632 050
- DE-A- 2 034 887
- DE-A- 2 730 371
- CHEMICAL ABSTRACTS, vol. 121, no. 21, 21.November 1994 Columbus, Ohio, US; abstract no. 256037, HARUNA T ET AL 'preparation of novel cyclic phosphonites' & JP-A-6 145 182 (ASAHI DENKA KOGYO KK;JAPAN) 24 Mai 1994

## Beschreibung

Die Erfindung betrifft ein Verfahren zur Herstellung von gegebenenfalls substituierten ODOP durch Umsetzen von gegebenenfalls substituierten o-Phenylphenolen in einer 1. Stufe mit PCl₃ und durch Hydrolyse des Produkts der 1. Stufe in einer 2. Stufe.

ODOP sind wichtige Additive für Polymere zum Schutz gegen oxidativen Abbau und zur Flammfestausrüstung und dienen weiterhin als Ausgangsprodukte zur Herstellung weiterer Polymeradditive.

Es ist bekannt (DE-OS 20 34 887, Beispiel 5 und 6), 6-Oxo-(6H)-dibenz[c,e][1,2] oxaphosphorine (ODOP) durch alkalische Verseifung von 6-Chlor-(6H)-dibenz[c,e][1,2] oxaphosphorinen mit Sodalösung herzustellen. Man erhält dabei in einer umständlichen Operation zunächst das Natriumsalz der Hydroxydiphenylphosphinsäure (III) in stark verunreinigter wäßrig-alkalischer Lösung, die mit Hilfe von A-Kohle gereinigt werden muß.

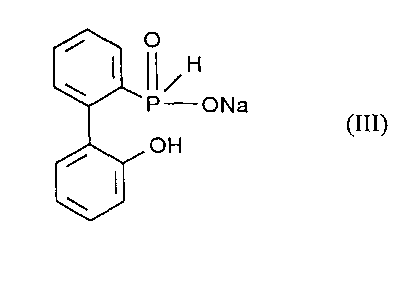

Das Natriumsalz wird durch Ansäuern in die freie Säure umgewandelt. Diese kann, da sie schwerlöslich ist, aus der wäßrigen Salzlösung isoliert werden. Anschließend muß sie durch Erhitzen auf höhere Temperaturen im Vakuum in das gewünschte ODOP übergeführt werden. Dies ist ein sehr aufwendiges und wenig umweltfreundliches Verfahren, da es mit einem Anfall von Salzen und großen Abwassermengen verbunden ist.

An anderer Stelle (DE-OS 27 30 371, S. 18 und 19) wird beschrieben, daß man 130°C heißes 6-Chlor-(6H)-dibenz-oxaphosphorin mit einer großen Menge Wasser zusammenbringt, die Hydrolyse durchführt, das Wasser unter vermindertem Druck abdestilliert und dann das 6-Oxo-dibenzoxaphosphorin erhält. Die beschriebene Operation ist technisch sehr problematisch und kaum im großen Maßstab durchführbar, da bei 130°C Wasser verdampft und das Reaktionsgemisch abkühlt. Man muß daher unter erhöhtem Druck arbeiten, wenn die Temperatur von 130°C gehalten und damit eine unkontrollierte Kristallisation verhindert werden soll, denn die Zielverbindung schmilzt deutlich oberhalb des Siedepunktes von Wasser.

Nach einem weiteren Beispiel (Beispiel 3 in DE-OS 20 34 887) wird ein Rohprodukt aus der Veresterung eines o-Phenylphenols mit PCl₃ durch Aufgießen auf Eis hydrolysiert. Dabei erhält man die entsprechende Phosphinsäure, die vom Wasser abgetrennt und in einem separaten Verfahrensschritt in das entsprechende Oxaphosphorin übergeführt werden muß.

Bei den genannten Verfahren erhält man als Nebenprodukte der Oxaphosphorinsynthese verdünnte und verunreinigte Salzsäure als schwer verwendbares und zu entsorgendes Nebenprodukt sowie Salzlösungen und Abwässer.

Keins der beschriebenen Verfahren zur Herstellung von ODOP sagt etwas aus über die Ausbeute und die Reinheit des Produktes. In jedem Fall wird lediglich festgestellt, daß man das gewünschte Produkt erhalten hat.

Es wird nicht einmal festgestellt, ob die Hydrolyse glatt und einheitlich verläuft oder ob sie durch Nebenreaktionen oder Folgereaktionen beeinträchtigt wird. Beim Vergleich der diskutierten Verfahrensvorschläge kommt der Fachmann zu dem Schluß, daß offensichtlich nur die alkalische Verseifung zu einem reinen Material führt, da lediglich hier ein Schmelzpunkt und eine passende Phosphoranalyse vorgelegt werden. Diese Folgerung stützt sich aber auch darauf, daß bei der Verseifung mehrere Verfahrensschritte, nämlich die alkalische Verseifung, Behandlung mit A-Kohle, Filtration, Fällung mit Salzsäure, Absaugen, Waschen mit Wasser, Umkristallisieren der isolierten Phosphinsäure aus Ethanol/Wasser-Gemisch und schließlich der Ringschluß zum Oxaphosphorin durch Dehydratisierung bei 150°C / 30 Torr, verbunden mit Reinigungseffekten, durchlaufen werden.

Arbeitet man die vorgeschlagenen Verfahren nach, findet man Ausbeuten und Reinheiten von ODOP, die nicht reproduzierbar sind. Besonders die Verunreinigung von ODOP mit o-Phenylphenol schwankt sehr stark und zwingt zu einer zusätzlichen Reinigung des erhaltenen ODOP, damit es in gleichbleibender Qualität verfügbar wird. Eigene Untersuchungen ergaben, daß die Art der Umsetzung der o-Phenylphenole mit PCl₃ großen Einfluß auf die Ausbeute und Reinheit des ODOP hat.

Auch für die Reaktion von o-Phenylphenolen mit PCl₃ gibt es verschiedene Vorschläge.

Gemäß DE-OS 20 34 887 werden PCl₃ und o-Phenylphenole in stöchiometrischen Mengen miteinander umgesetzt (S. 8, letzter Abschnitt), d.h., daß ein Unterschuß oder Überschuß, wenn auch aus unterschiedlichen Gründen, möglichst vermieden werden sollte.

Im Beispiel 1 der oben angegebenen DE-OS wird auf 1,2 Mol o-Phenylphenol jedoch ein Überschuß an PCl₃, nämlich 1,5 Mol, eingesetzt. Dies wird begründet mit dem Entweichen von PCl₃ gemeinsam mit dem abgespaltenem HCl. Die Rechnung ergibt, daß der angegebene Überschuß an PCl₃ während der Umsetzung tatsächlich mit HCl ausgetragen wird, also schließlich ein stöchiometrisches Verhältnis von 1 Mol PCl₃ zu 1 Mol o-Phenylphenol vorliegt.

Die Ausbeute an hierbei entstehendem 6-Chlor-(6H)-dibenz-[c,e][1,2]-oxaphosphorin (CDOP) wird nicht angegeben. Die Nacharbeitung ergibt eine Ausbeute von ca. 80 % der theoretischen Ausbeute bezüglich o-Phenylphenol. Dies wird bestätigt durch die Untersuchungen in Phosphorus und Sulfur, Vol. 31, 71-76 (1987), insbesondere S. 74 (1). Dort wird bei der Synthese von ODOP nach DE-OS 20 34 887 eine Ausbeute von 79 % der theoretischen Ausbeute angegeben.

Die DE-OS 2 730 371 beschreibt im Beispiel 1 (S. 18) eine Umsetzung von o-Phenylphenol (40 Mol) mit Phosphortrichlorid (47 Mol), wobei, anders als in Beispiel 1 der DE-OS 20 34 887, die Lewissäure (hier ZnCl₂) nicht erst nach der Veresterung der o-Phenylphenole mit PCl₃, sondern von Beginn an zugesetzt wird. Außerdem wird PCl₃ zum vorgelegten auf 80° temperierten o-Phenylphenol zugetropft und dann auf 180° gebracht. Die weitere Beschreibung des Versuches ist ungenau und eine Ausbeuteangabe fehlt ebenfalls

In der EP 582 957 wird wie nach DE-OS 2 730 371 der Katalysator gleich anfangs dem Reaktionsgemisch beigefügt und PCl₃ zugetropft, jedoch die Temperatur sofort auf 180°C gebracht. Man erhält eine sehr gute Ausbeute an CDOP.

Bei der Betrachtung dieses Standes der Technik kommt der Fachmann zu dem Schluß, daß die Kombination der Vorschläge von DE-OS 2 730 371 und EP 582 957, nämlich das Vorhandensein des Katalysators von Beginn der Umsetzung an, das Zutropfen von PCl₃ und das Einstellen einer hohen Temperatur über die gesamte Reaktionszeit, die gefundene Ausbeuteverbesserung bewirkt.

Unter Beachtung dieser Bedingungen durchgeführte Versuche ergeben unterschiedliche Ausbeuten und zwar in Abhängigkeit von anderen wichtigen Parametern, z.B. Zutropfgeschwindigkeit des PCl₃, Geschwindigkeit des entweichenden Chlorwasserstoffs und der Temperatur des Kühlmediums im Rückflußkühler. Diese Parameter jedoch beeinflussen die Menge des mit dem Chlorwasserstoff ausgetragenen PCl₃.

Es wurde nun gefunden, daß man dann ein geeignetes Umsetzungsprodukt aus o-Phenyl-phenolen und PCl₃ für die Synthese von ODOP durch Hydrolyse erhält, wenn man die Reaktion nicht mit einer stöchiometrischen Menge an PCl₃ durchführt, wie DE-OS 2 034 887 lehrt, sondern wenn man während der Reaktionszeit und besonders zu deren Ende hin einen Überschuß von mindestens 0,05 Mol an nicht abreagiertem PCl₃ pro Mol eingesetzten o-Phenylphenols im Reaktionsgemisch vorhält. Ein Überschuß an PCl₃ reicht demnach nicht aus, er muß vielmehr eine Mindestmenge überschreiten und während der gesamten Reaktionszeit bis zum Ende aufrechterhalten werden.

Werden solche Reaktionsgemische aufdestilliert, erhält man Destillate, die bei der nachfolgenden Hydrolyse reproduzierbar hohe Ausbeuen an reinem ODOP liefern.

Weiter wurde gefunden, daß die Hydrolyse von CDOP ohne Einbußen an Umsatz und Produktreinheit mit praktisch der stöchiometrisch erforderlichen Menge Wasser durchgeführt werden kann, wenn man das Destillat als Schmelze oder in einer entsprechenden Menge eines geeigneten Lösungsmittels gelöst mit dem Wasser in flüssiger oder dampfförmiger Form in der Regel bei erhöhter Temperatur unter Hydrolyse reagieren läßt und den entstehenden Chlorwasserstoff als Gas oder als Salzsäure entfernt. Das so erhaltene ODOP ist so rein, daß es für viele Zwecke ohne weiteres nach der Entfernung von Lösungsmittel oder Resten an Wasser oder Chlorwasserstoff aus der Schmelze heraus kristallisiert und konfektioniert werden kann. Man kann auch eine Kristallisation aus dem Lösungsmittel vornehmen, falls dies erforderlich sein sollte. Dies stellt eine bedeutende Vereinfachung des gesamten Verfahrens und die Beseitigung von Umweltproblemen dar.

Die vorliegende Erfindung betrifft ein Verfahren zur Herstellung von 6-Oxo-(6H)-dibenz-[c,e][1,2]-oxaphosphorinen (ODOP) der Formel 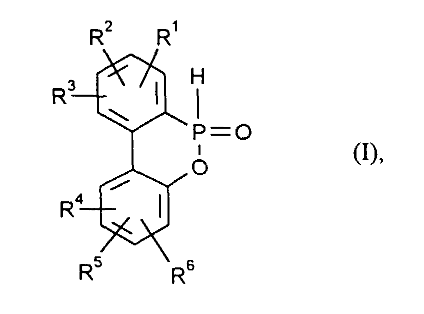 worin
- R¹ bis R⁶: gleich oder verschieden sind und Wasserstoff, Halogen, C₁-C₄-Alkyl oder C₁-C₄-Alkoxy bedeuten,
durch Umsetzen von o-Phenylphenolen der Formel 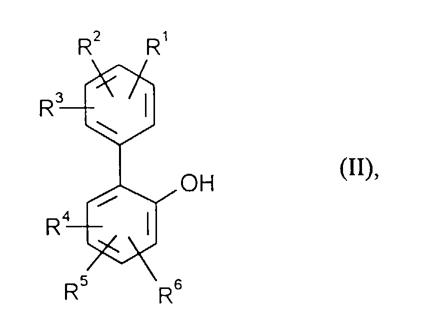 worin
- R¹ bis R⁶: die oben angegebene Bedeutung haben,
in einer 1. Stufe mit Phosphortrichlorid in Gegenwart von Lewissäuren unter Abspalten von Chlorwasserstoff bei erhöhter Temperatur im Bereich von 70 bis 220°C und Hydrolyse des Produkts der 1. Stufe in einer 2. Stufe, das dadurch gekennzeichnet ist, daß während der gesamten Reaktionszeit der 1. Stufe eine Menge an nicht abreagiertem Phosphortrichlorid von wenigstens 0,05 Mol pro Mol eingesetztes o-Phenylphenol im Reaktionsgemisch aufrechterhalten wird und man das Produkt der 1. Stufe nach Entfernung des überschüssigen PCl₃ als Schmelze oder gelöst in einem inerten Lösungsmittel mit 1 bis 2, bevorzugt 1 bis 1,7, besonders bevorzugt 1 bis 1,5 Mol H₂O pro Chloräquivalent des Produkts der 1. Stufe bei 50 bis 150°C, bevorzugt bei 70 bis 130°C, umsetzt und HCl sowie restliches H₂O durch Erhitzen auf bis zu 140 bis 170°C entfernt.

Die vorliegende Erfindung führt demnach über die in der 1. Stufe entstehende 6-Chlor-(6H)-dibenz-[c,e][1,2]-oxaphosphorine (CDOP) der Formel 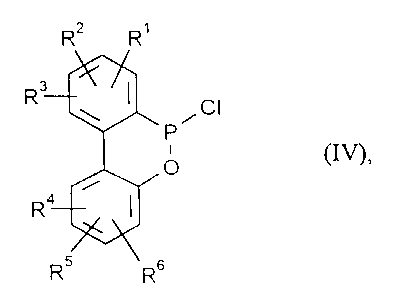 worin
- R¹ bis R⁶: die oben angegebene Bedeutung haben.

Geeignete Ausgangsprodukte für das erfindungsgemäße Verfahren sind einerseits o-Phenylphenole der Formel (I), worin R¹ bis R⁶ unabhängig voneinander Wasserstoff, Methyl, Ethyl, Propyl, Isopropyl, Butyl, Isobutyl, Methoxy, Ethoxy, Propoxy, Isopropoxy, Butoxy bzw. Isobutoxy, sowie Fluor, Chlor oder Brom, bevorzugt Chlor bedeuten, und andererseits Phosphortrichlorid.

Katalysatoren sind Lewissäuren, wie sie beispielsweise in der DE-OS 2 034 887 genannt sind, vorzugsweise FeCl₃ und ZnCl₂.

In bevorzugter Weise werden o-Phenylphenole eingesetzt, in denen zwei der Reste R¹ bis R⁶ Wasserstoff bedeuten; in besonders bevorzugter Weise bedeuten vier der Reste R¹ bis R⁶ Wasserstoff; ganz besonders bevorzugt ist o-Phenylphenol.

In jedem Falle steht in (II) an mindestens einer der zur Ausbildung des Oxaphosphorinringes benötigten Positionen des nicht OH-substituierten Benzolkernes Wasserstoff.

Die Reaktion verläuft in der 1. Stufe offensichtlich über 2 Reaktionsphasen. In der ersten Phase wird unter Austritt von 1 Mol HCl eine offenkettige Struktur gebildet, für die nach DE-OS 20 34 887, Beispiel 1, eine esterartige Struktur an der OH-Gruppe des o-Phenylphenols formuliert wird, die in einer zweiten Reaktionsphase in die cyclische Struktur des Oxaphosphorinringes unter nochmaliger HCl-Abspaltung übergeht; beide Reaktionsphasen können offenbar zum Teil überlappen. Dies läßt sich am Beispiel des nicht substituierten o-Phenylphenols wie folgt darstellen:

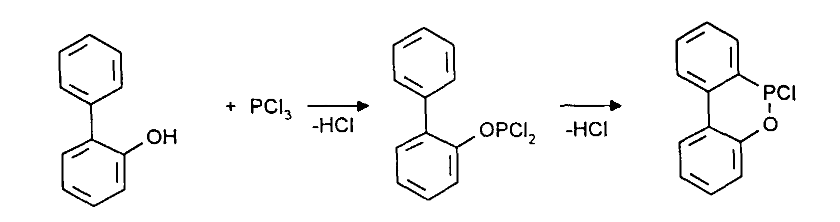

Die Hydrolyse in der 2. Stufe verläuft offenbar wie folgt:

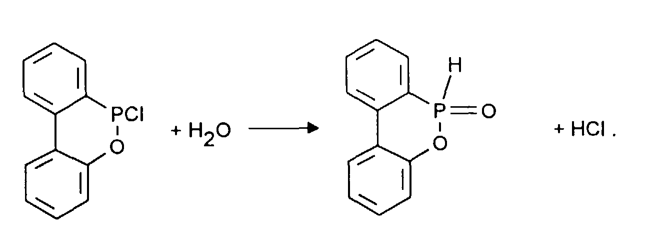

Das wesentliche Merkmal der vorliegenden Erfindung ist die ständige Aufrechterhaltung eines molaren Überschusses von mindestens 0,05 Mol an nicht abreagiertem PCl₃ pro Mol o-Phenylphenol in der 1. Stufe, verbunden mit der weiter unten näher beschriebenen Hydrolyse.

Das war aus dem derzeitigen Stand der Technik nicht zu entnehmen. Man erhält auf diese Weise zuverlässig und reproduzierbar hohe Ausbeuten und zwar unabhängig davon, ob man den Katalysator schon anfangs oder erst nach der Veresterung zugibt, die gesamte PCl₃-Menge gleich am Anfang einsetzt, sie teils zu Beginn, teils später zusetzt oder auch über die gesamte Reaktionszeit hin dosiert und ob man anfangs bei niedriger (70 bis 140°C) oder hoher (180°C) Temperatur oder beim Ringschluß bei 160 bis 180°C oder auch bis 220°C arbeitet.

Der Überschuß an noch nicht umgesetztem PCl₃ pro Mol eingesetztem o-Phenylphenol beträgt also zu jedem Zeitpunkt der Reaktion in der 1. Stufe mindestens 0,05, bevorzugt 0,08, besonders bevorzugt 0,1, ganz besonders bevorzugt mindestens 0,13 Mol. Größere Überschüsse sind möglich, aber ökonomisch begrenzt. So beträgt der Überschuß 0,05 bis 10 Mol, bevorzugt 0,08 bis 2 Mol, besonders bevorzugt 0,1 bis 0,5 Mol pro Mol o-Phenylphenol. Unabhängig von diesem Überschuß muß jeweils 1 Mol PCl₃/Mol o-Phenylphenol für die Umsetzung eindosiert werden.

Die Entfernung des überschüssigen PCl₃ geschieht im allgemeinen durch Abdestillieren. Reste PCl₃ können bei nachfolgenden Umsetzungen von CDOP beispielsweise bei der Hydrolyse empfindlich stören. Darum muß die Destillation im Vakuum durchgeführt werden. Dies wiederum erschwert die Kondensation und Rückgewinnung des überschüssigen PCl₃ und seine Vernichtung im Abgasstrom verursacht zusätzlichen Aufwand.

Es wurde nun zusätzlich gefunden, daß durch Zusatz einer kleinen Menge eines inerten Lösungsmittels, das höher als PCl₃ und niedriger als CDOP siedet und leicht destillativ abgetrennt werden kann, eine einfache und vollständige Entfernung von PCl₃ schon durch Destillation bei Normaldruck und mäßigen Temperaturen gelingt und eine Wiederverwendung des überschüssigen PCl₃ gewährleistet wird.

PCl₃ und o-Phenylphenole können mit ihren Gesamtmengen bei Reaktionsbeginn eingesetzt werden. Es ist auch möglich, eine der beiden Ausgangskomponenten vorzulegen und die andere zuzudosieren. Die Veresterung von o-Phenylphenol mit PCl₃ kann in einem ersten Schritt vorweg in Abwesenheit des Katalysators bei niedrigeren Temperaturen durchgeführt werden oder aber auch in Anwesenheit des Katalysators bei höheren Temperaturen, wobei gleichzeitig auch die Ringschlußreaktion zu CDOP ablaufen kann.

Inerte Lösungsmittel zur destillativen Entfernung von PCl₃ im Sinne der Erfindung sind solche, die mit den verwendeten Stoffen unter den angewandten Bedingungen nicht reagieren. Die Siedepunkte sollten zweckmäßig zwischen etwa 90 und 200°, vorzugsweise 100 und 180°, besonders bevorzugt 105 bis 170° liegen.

Geeignete Lösungsmittel sind beispielsweise aliphatische, aromatische und araliphatische Kohlenwasserstoffe und deren Halogenverbindungen. Genannt seien Methylcyclohexan, Isooctan, Isodecan, Isododecan, Isononan, Dimethylcyclohexan, Benzine wie Leichtbenzin, Dicyclopentan, Decalin, Toluol, Cumol, Xylole, Mesitylen, Cymole, Chlorbenzol, Chlortoluol, Brombenzol, Dichlorbenzol, Chlorcumol, Ethylbenzol und Diethylbenzol und Gemische mehrerer von ihnen.

Während der gesamten Reaktionszeit muß ein bestimmter Pegel an nicht reagiertem PCl₃ gehalten werden. Dieser beträgt mindestens 0,05 Mol pro Mol eingesetztem o-Phenylphenol. In dem Maße, wie vorhandenes PCl₃ umgesetzt wird, muß durch Zudosieren die Mindestmenge an noch nicht reagiertem PCl₃ eingehalten werden. Selbstverständlich kann auch deutlich mehr PCl₃ im Reaktionsgemisch vorliegen. So ist es möglich, die insgesamt für einen Ansatz notwendige PCl₃-Menge inklusive der Mengen, die hinsichtlich des Austrages durch den HCl-Strom zusätzlich vorgesehen sind, vorzulegen und o-Phenylphenol darin einzutragen. Dann hat sich die Kontrolle des PCl₃-Gehaltes besonders auf das Ende der Reaktionszeit zu konzentrieren, weil gerade dann die Gefahr der Unterschreitung der Mindestmenge besteht.

Wird o-Phenylphenol vorgelegt, muß während der gesamten Reaktionsdauer der PCl₃-Gehalt überwacht werden.

Dies kann beispielsweise durch gaschromatographische Bestimmung des PCl₃-Gehaltes im Abgas oder im Reaktionsgemisch oder durch andere geeignete Methoden erfolgen. Wenn jedoch die verwendeten Apparaturen und Reaktionsbedingungen hinreichend genau ausgearbeitet und angepaßt wurden und dadurch die Verluste an PCl₃ über den HCl-Strom bekannt sind, kann man sich mit der Überwachung von PCl₃ am Reaktionsende begnügen.

Zur technischen Realisierung kann beispielsweise ein ausreichend dimensionierter Rückflußkühler für das bei etwa 75°C siedende PCl₃ vorgesehen werden, der zusätzlich mit Kühlmittel von ausreichend niedriger Temperatur beschickt werden kann. Ferner kann durch kontrollierte Zugabe der Reaktionspartner und der Temperatursteigerung die HCl-Entwicklung und damit die Geschwindigkeit des entweichenden HCl gebremst werden, wodurch PCl₃-Verluste in Grenzen gehalten werden.

Die Umsetzung kann bei Temperaturen ab ca. 80° für die Veresterung bis ca. 220° für den Ringschluß durchgeführt werden. Falls bei den hohen Temperaturen der gewünschte Mindestgehalt an PCl₃ im Reaktionsgemisch nicht gehalten werden kann, läßt sich dies durch leichte Erhöhung des Druckes erreichen. Im übrigen kann auch während der gesamten Reaktionsdauer der Verlust an PCl₃ durch eine Arbeitsweise unter Druck deutlich reduziert werden, etwa bei 1-15 bar, bevorzugt bei 1-10 bar.

Zur Durchführung der Hydrolyse in der 2. Stufe des erfindungsgemäßen Verfahrens wird das Produkt der 1. Stufe als Schmelze oder Lösung in einem inerten Lösungsmittel eingesetzt. Lösungsmittel hierfür können die gleichen sein, die weiter oben für die Entfernung des PCl₃ genannt wurden. In bevorzugter Weise wird in der Lösung des selben Lösungsmittels hydrolysiert, das zur PCl₃-Entfernung eingesetzt worden war.

Es ist vorteilhaft, das Produkt der 1. Stufe vor der Hydrolyse, beispielsweise durch Kristallisation oder Vakuumdestillation, zu reinigen.

Die Destillation des Umsetzungsproduktes der 1. Stufe wird bei vermindertem Druck, z.B. bei 0,01 bis 50 mbar, bevorzugt bei 0,5 bis 30 mbar, zweckmäßig in einem Schnellverdampfer, wie einem Fallfilm- oder Dünnschichtverdampfer oder in ähnlichen, dem Fachmann bekannten Apparaten, vorgenommen.

Die für die vollständige Hydrolyse erforderliche Wassermenge ist die stöchiometrische, d.h., pro Chloräquivalent im Produkt der 1. Stufe muß mindestens 1 Mol Wasser eingesetzt werden. Der Bereich für die erfindungsgemäß einzusetzende Wassermenge beträgt 1 - 2, bevorzugt 1 - 1,7 Mol, besonders bevorzugt 1 - 1,5 Mol Wasser pro Chloräquivalent.

Die Hydrolyse kann so durchgeführt werden, daß man das Produkt der 1. Stufe in einem der obengenannten Lösungsmittel löst, wobei die Lösungsmittelmenge zweckmäßig die 0,1 bis 4fache Gewichtsmenge des Produkts der 1. Stufe beträgt, und zu der gerührten Lösung das Wasser flüssig oder dampfförmig in dem Maße einträgt, daß der entweichende Chlorwasserstoffstrom beherrschbar bleibt. Für die Vermischung der Lösung mit dem Wasser können Rührwerksbehälter, Umlaufpumpen, Kreiselpumpen, Mischstrecken mit statischen Mischern oder Gegenstromkolonnen oder andere geeignete, dem Fachmann geläufige Geräte verwendet werden. Die Hydrolyse wird man im allgemeinen unter Normal- oder wenig erhöhtem Druck bis ca. 3 bar durchführen. Die Anwendung höherer Drücke ist jedoch auch möglich.

Durch das Arbeiten in Lösungsmitteln ist man in der Wahl der Reaktionstemperatur relativ frei, da der Kristallisationspunkt von der Lösungsmittelmenge mitbestimmt ist. So kann die Temperatur zwischen 50 und 150°C variieren. Vorteilhaft liegt sie zwischen 70 und 130°C. Zum Schluß wird sie zur Entfernung von HCl- und Wasserspuren bis auf 140 bis 170°C gebracht.

Danach kann man ODOP aus dem Lösungsmittel auskristallisieren lassen und es dann auf üblichem Wege in sehr reiner Form isolieren. Dies empfiehlt sich z.B., wenn an das Produkt spezielle Reinheitsanforderungen gestellt werden. Im allgemeinen kann das Lösungsmittel jedoch destillativ, zuletzt im Vakuum, bis zu etwa 170 bis 180°C Sumpftemperatur entfernt und die resultierende ODOP-Schmelze kristallisiert und konfektioniert werden. Diese beiden Schritte lassen sich z.B. durch Verwendung von Kühlbändern, Kühlwalzen oder Kristallisierschnecken oder anderen geeigneten Apparaturen durchführen.

Man kann die Hydrolyse auch ohne Zusatz von Lösungsmitteln direkt in der Schmelze durchführen. Dabei ist man auf einen engeren Temperaturbereich angewiesen. Beginnen kann die Reaktion bei ca. 90 bis 95°C. Am Ende der Reaktion sollte die Temperatur mindestens 120°C betragen, wenn eine unkontrollierte Kristallisation vermieden werden soll. Das für die Hydrolyse nötige Wasser wird wegen der höheren Temperaturen zweckmäßig als Dampf z.B. am Boden des Reaktionsgefäßes zugegeben, wobei, wie oben beschrieben, auch andere geeignete Apparate für diesen Zweck eingesetzt werden können. Hier würde sich auch eine Arbeitsweise unter geringem Überdruck anbieten. Die weitere Durchführung der Reaktion verläuft wie im Falle der Lösungsmittelverwendung mit der selbstverständlichen Ausnahme, daß eine Kristallisation aus einem Lösungsmittel erst nach dessen Zugabe möglich ist.

### Beispiel 1

Zu 1267 g (7,45 Mol) o-Phenylphenol wurden in einem Dreihalskolben mit Rührer, Thermometer, Intensivkühler und Tropftrichter unter Stickstoff und Rühren bei ca. 80° in 4 h 1350 g (9,78 Mol) Phosphortrichlorid zugetropft, wobei Chlorwasserstoff abgespalten wurde. Die zugetropfte Menge PCl₃ umfaßte die pro Zeiteinheit durch Reaktion verbrauchte Menge PCl₃ und einen Überschuß von mindestens 52 g PCl₃ (= 0,38 Mol = 0,051 Mol pro Mol o-Phenylphenol). Die Überwachung erfolgte gaschromatographisch oder durch destillative Aufarbeitung entnommener Proben. Der Kühler wurde mit einem kräftigen Strom Wasser von 13 bis 15° gespeist. In den folgenden 6 h wurde die Reaktionstemperatur langsam und stetig von 80° auf ca. 142°C angehoben. Danach befanden sich 245 g PCl₃ (= 0,24 Mol pro Mol o-Phenylphenol) im Kolben und die HCl-Entwicklung hörte auf.

Nach Zugabe von 6,4 g Zinkchlorid wurde innerhalb von 13 h die Temperatur stetig auf etwa 200° erhöht, bis sich kein HCl mehr entwickelte. Danach waren noch 133 g PCl₃ (= 0,13 Mol pro Mol eingesetztes o-Phenylphenol) im Reaktionsgemisch. Das überschüssige PCl₃ wurde nach Zugabe von 200 g Xylol über eine kurze Kolonne abdestilliert und separat aufgefangen; es konnte in folgende Ansätze wieder eingesetzt werden. Die letzten Reste PCl₃ gingen mit wenig Xylol über, das später gleichfalls wieder verwendet werden konnte. Die erhaltene xylolische Mischung kann weiteren Umsetzungen unterworfen werden. Sie wurde halbiert und eine Hälfte zwecks Gewinnung von reinem 6-Chlor-(6H)-dibenz-[c,e][1,2]-oxaphosphorin (CDOP) im Vakuum destilliert. Bei 160 bis 165° Kopftemperatur und 2 bis 3 mbar gingen nach einem Xylolvorlauf 838 g (>95 % der theoretischen Ausbeute) eines wasserklaren Destillates über mit einem Gehalt an CDOP von 98,8 %.

### Beispiel 2 (Vergleich)

Beispiel 1 wurde wiederholt, der Kühler aber mit Wasser von 17 bis 20° beschickt. Nach der 1. Reaktionsphase, d.h. vor der Zugabe von Zinkchlorid, enthielt die Reaktionsmischung noch 0,14 Mol PCl₃ pro Mol o-Phenylphenol. Nach der Zugabe von Zinkchlorid und der 2. Reaktionsphase verblieben am Ende nur noch 0,03 Mol PCl₃ pro Mol o-Phenylphenol im Kolben. Bei der Destillation des Rohproduktes erhielt man eine Ausbeute an CDOP von 78 % der theoretischen Ausbeute.

### Beispiel 3 (Vergleich)

Entfernte man aus dem Gemisch der 1. Reaktionsphase nach Beispiel 2 vor der Zugabe von Zinkchlorid das überschüssige PCl₃ durch Vakuumdestillation bis 140° Sumpftemperatur, fügte dann Zinkchlorid zu und erhitzte in 13 h stetig bis auf 200° wie in Beispiel 1, so erhielt man eine Ausbeute an CDOP von 61 % der theoretischen Ausbeute.

### Beispiel 4 (Vergleich)

816 g (4,8 Mol) o-Phenylphenol und 824 g (6,0 Mol) Phosphortrichlorid wurden unter Stickstoff und Rühren langsam auf 55°C erhitzt, wobei langsam eine HCl-Abspaltung stattfand. Weiteres Erwärmen beschleunigte die HCl-Entwicklung; PCl₃ siedete dabei unter Rückfluß. Nach etwa 5 h betrug die Innentemperatur ca. 142°C und die HCl-Entwicklung hörte auf. Zu dieser Zeit betrug der Überschuß an nicht umgesetztem PCl₃ bezüglich eingesetztem o-Phenylphenol 0,14 Mol pro Mol o-Phenylphenol von ursprünglich 0,25 Mol.

Danach wurden 4,3 g ZnCl₂ zugesetzt und die Temperatur innerhalb von 10 h stetig bis auf 195° erhöht, bis kein Chlorwasserstoff mehr entwich. Nun waren noch 0,03 Mol überschüssiges PCl₃ pro Mol o-Phenylphenol vorhanden. Die Ausbeute an CDOP betrug 78 % der theoretischen Ausbeute.

### Beispiel 5

Zu einem Gemisch von 1267 g (7,45 Mol) o-Phenylphenol und 6,4 g Zinkchlorid tropfte man in 5 1/2 Stunden 1045 g (7,61 Mol) Phosphortrichlorid zu, wobei der entweichende Chlorwasserstoff durch einen mit Wasser von 12° beschickten Intensivkühler und dann durch eine mit Trockeneis gekühlte Kühlfalle geleitet wurde. Während dieser Zeit lag die Temperatur bei 160 bis 166° und PCl₃ siedete unter Rückfluß.

Danach wurden bei 165 bis 168° weitere 360 g PCl₃ zugetropft und während 12 h unter Rückfluß und HCl-Entwicklung gehalten. Der deutlich erkennbare Rückfluß zeigte einen ausreichenden Überschuß an PCl₃ an, der an Hand von entnommenen Proben bestätigt wurde und bei Wiederholungen der Versuche als Richtschnur dienen konnte. Zuletzt lag die Temperatur bei 168 bis 169°C. Dann wurden ca. 300 g Xylol zugesetzt und insgesamt etwa 168 g PCl₃ zunächst allein, dann mit einem Teil des Xylols abdestilliert. In der Kühlfalle befanden sich sodann etwa 190 g PCl₃, so daß insgesamt ca. 1215 g PCl₃ verbraucht wurden. Theoretisch hätten es 1023 g sein müssen, so daß ca. 192 g durch den HCl-Strom und Verdunstungsvorgänge beim Umfüllen und Kondensieren verloren gingen.

Aus der Menge von ca, 190 g PCl₃ (Inhalt der Kühlfalle), die am Ende der Reaktion noch im Gemisch vorhanden waren, errechnet sich ein Überschuß von 0,186 Mol PCl₃ pro Mol eingesetztes o-Phenylphenol zu dem Zeitpunkt, als die HCl-Entwicklung aufhörte.

Die nach dem Abdestillieren von PCl₃ erhaltene Lösung des Reaktionsgemisches in Xylol wurde im Vakuum eingedampft und das Reaktionsprodukt im Hochvakuum destilliert (159 bis 163° bei 0,3 bis 0,4 mbar).

Man erhielt ein wasserhelles Destillat von 1719 g (98 % der theoretischen Ausbeute) und einen braunen harzigen Rückstand von 30 g.

### Beispiel 6

Beispiel 1 wurde in identischer Weise bis zur Destillation der letzten Reste PCl₃ gemeinsam mit wenig Xylol wiederholt.

Der Destillationsrückstand wurde bei 160 bis 165°C Kopftemperatur und 2 bis 3 mbar destilliert. Nach einem kurzen Vorlauf von Xylol gingen 1 675 g Produkt über, entsprechend einer Destillationsausbeute von > 95 %.

Das erhaltene Destillat wurde etwa in der gleichen Menge Xylol gelöst und bei 80°C in 3 h tropfenweise mit 131,1 g (7,29 Mol) H₂O, etwa 2,5 g mehr als der stöchiometrisch nötigen Menge entspricht, unter kräftigem Rühren versetzt und HCl abgespalten. Nachdem die Hauptmenge HCl ausgetrieben war, wurde die Temperatur angehoben, bis das Gemisch unter Rückfluß siedete, was über ca. 2 h beibehalten wurde. Die Lösung wurde dann halbiert.

### Beispiel 6a)

Teil 1 der in Beispiel 1 erhaltenen Lösung brachte man bei langsam fallendem Druck unter Siedekühlung zur Kristallisation. Der farblose Kristallbrei wurde abgesaugt, mit Xylol gewaschen und getrocknet. Man erhielt 685 g eines weißen Kristallpulvers mit einem Gehalt an ODOP von 99,9 %, o-Phenylphenol von 0,01 % und Chlor von 50 ppm.

Die Mutterlauge enthielt noch etwa 93 g ODOP und ist für weitere Kristallisationsansätze zu verwenden.

### Beispiel 6b)

Teil 2 der in Beispiel 1 erhaltenen Lösung wurde im Vakuum bis ca. 170°C von Lösungsmitteln befreit und dann als Schmelze in einer kleinen Schnecke kristallisiert. Man erhielt 760 g weißes, gekörntes Produkt mit einem Gehalt an ODOP von 99,7 %, o-Phenylphenol von 0,26 % und Chlor von 250 ppm.

### Beispiel 7a)

Von dem in Beispiel 5 erhaltenen Destillat wurden 868,1 g (entsprechend 3,7 Cl-Äquivalenten) in 400 g Xylol gelöst und bei 80°C tropfenweise unter kräftigem Rühren mit 65,4 g (3,63 M) Wasser in 2 h versetzt, wobei eine kräftige HCl-Entwicklung stattfand. Nach insgesamt 3 h war die Temperatur auf 135 bis 140°C gestiegen und die HCl-Bildung nur noch sehr gering. Der Cl-Gehalt der Lösung betrug 0,35 %. Nun wurden noch 4,1 g (0,23 M) Wasser zugetropft und die Hydrolyse in weiteren 3 - 4 h zu Ende gebracht.

Nach Abdestillieren des Xylols im Vakuum bis zu einer Sumpftemperatur von 170 bis 180°C unter N₂-Begasung blieb eine fast farblose Schmelze, die zur Entfernung einer Trübung durch eine Drucknutsche filtriert wurde, wobei eine klare Schmelze erhalten wurde, die in einer Kristallisierschnecke kristallisiert wurde.
- Ausbeute:: 794,8 g, das sind 98,0 % der theoretischen Ausbeute, bezogen auf eingesetztes o-Phenylphenol
- Farbzahl nach Hazen:: 10 (10%ige Lösung in Aceton)
Gehalt an:
- Chlor:: 50 ppm
- ODOP:: 99,8 %
- o-Phenylphenol:: 0,06 %

### Beispiel 7b)

Ein anderer Teil des Destillats aus Beispiel 5 wurde in etwa der gleichen Menge an Xylol gelöst und wie im Beispiel 7a hydrolysiert. Die erhaltene heiße Lösung wurde zur Entfernung einer schwachen Trübung filtriert und dann unter Rühren, beginnend bei einer Temperatur von 125°C, durch langsames Absenken des Druckes bis auf etwa 30 mbar bei Siedekühlung zum Kristallisieren gebracht. Der erhaltene farblose Kristallbrei wurde abgenutscht, mit Xylol gewaschen und getrocknet.

Nach der Wäsche wurde der Kristallbrei unter Abdestillieren von Xylol, zuletzt im Vakuum, wie oben in Beispiel 7a beschrieben, wieder aufgeschmolzen und wiederum in einer Kristallisierschnecke kristallisiert.
- Ausbeute:: 88 %, bezüglich o-Phenylphenol
Gehalt an:
- ODOP:: 99,9 %
- o-Phenylphenol:: 0,01 %

Die xylolische Mutterlauge, die ca. 11 % des gebildeten ODOP enthielt, konnte im folgenden Ansatz wiederverwendet werden. Dann stieg die Ausbeute auf ca. 98 % der theoretischen Ausbeute, bezogen auf o-Phenylphenol.

### Beispiel 7c)

Ein letzter Teil des Destillats von 304 g (entsprechend 1,30 Cl-Äquivalente) aus Beispiel 5 wurde in einem Kolben aufgeschmolzen und auf 120 bis 130°C gebracht. Unter kräftigem Rühren wurde eine Menge von 28,8 g (1,60 M) Wasser als Dampf durch eine Fritte am Boden des Kolbens in 3 bis 4 h eingeblasen. Der dabei entwickelte Chlorwasserstoffstrom wurde über einen Kühler abgeleitet.

Nach Beendigung der Hydrolyse erhielt man eine schwach gelbliche Schmelze, die kristallisiert wurde.
- Ausbeute:: 275,8 g, das sind 98,3 % der theoretischen Ausbeute, bezogen auf o-Phenylphenol
- Farbzahl nach Hazen:: 15 (10 %ige Lösung in Aceton)
Gehalt an:
- Chlor:: 81 ppm
- ODOP:: 99,8 %
- o-Phenylphenol:: 0,01 %

### Beispiel 8 (Vergleich)

Zu 422 g (2,48 M) o-Phenylphenol wurden innerhalb von 3,5 h bei 80 bis 115°C 450 g (3,28 M) PCl₃ zugetropft, wobei ein kräftiger HCl-Strom entwich. Nach weiteren 3 h betrug die Innentemperatur 150°C und die HCl-Entwicklung ließ nach. 2,1 g ZnCl₂ wurden zugegeben und das Erhitzen 6 h lang bis zu einer Temperatur von etwa 200°C fortgesetzt. Während der gesamten Reaktionszeit schwankte die Kühlwasserstemperatur zwischen etwa 16 und 19°C. Am Ende der Reaktionszeit betrug der Überschuß an PCl₃ 0,04 Mol pro Mol eingesetzten o-Phenylphenol.

Die Destillation des Produktes analog Beispiel 1 ergab eine Destillationsausbeute von 82 %.

Nach der Hydrolyse wie in Beispiel 6 erhielt man ein ODOP mit einem Gehalt an o-Phenylphenol von 4,2 %.

## Patentansprüche

1. Verfahren zur Herstellung von 6-Oxo-(6H)-dibenz-[c,e][1,2]-oxaphosphorinen der Formel 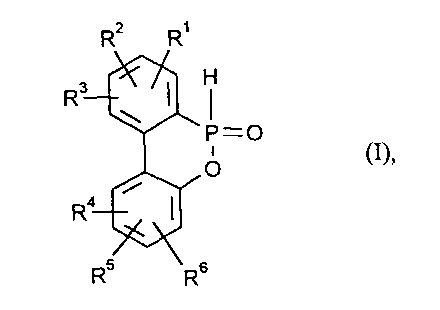 worin
R¹ bis R⁶ gleich oder verschieden sind und Wasserstoff, Halogen, C₁-C₄-Alkyl oder C₁-C₄-Alkoxy bedeuten,
durch Umsetzen von o-Phenylphenolen der Formel 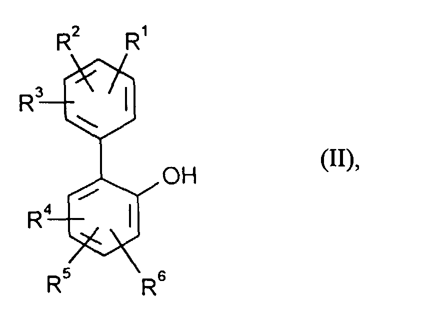 worin
R¹ bis R⁶ die oben angegebene Bedeutung haben,
in einer 1. Stufe mit Phosphortrichlorid in Gegenwart von Lewissäuren unter Abspalten von Chlorwasserstoff bei erhöhter Temperatur im Bereich von 70 bis 220°C und Hydrolyse des Produktes der 1. Stufe in einer 2. Stufe, dadurch gekennzeichnet, daß während der gesamten Reaktionszeit der 1. Stufe eine Menge an nicht abreagiertem Phosphortrichlorid von wenigstens 0,05 Mol pro Mol eingesetztes o-Phenylphenol im Reaktionsgemisch aufrechterhalten wird und man das Produkt der 1. Stufe nach Entfernung des überschüssigen PCl₃ als Schmelze oder gelöst in einem inerten Lösungsmittel mit 1 bis 2, bevorzugt 1 bis 1,7, besonders bevorzugt 1 bis 1,5 Mol H₂O pro Chloräquivalent des Produkts der 1. Stufe bei 50 bis 150°C, bevorzugt bei 70 bis 130°C, umsetzt und HCl sowie restliches H₂O durch Erhitzen auf bis zu 140 bis 170°C entfernt.

2. Verfahren nach Anspruch 1, dadurch gekennzeichnet, daß das überschüssige PCl₃ nach Beendigung der 1. Stufe durch Destillation in Gegenwart eines inerten, höher als PCl₃ und niedriger als 6-Chlor-(6H)-dibenz[c,e][1,2]-oxaphosphorin siedenden Lösungsmittels aus dem Reaktionsgemisch entfernt wird.

3. Verfahren nach Anspruch 1, dadurch gekennzeichnet, daß zwei der Reste R¹ bis R⁶ Wasserstoff bedeuten, daß bevorzugt vier der Reste R¹ bis R⁶ Wasserstoff bedeuten und daß besonders bevorzugt alle Reste R¹ bis R⁶ Wasserstoff bedeuten.

4. Verfahren nach Anspruch 1, dadurch gekennzeichnet, daß die Umsetzung in einer 1. Reaktionsphase der 1. Stufe im Bereich von 70 bis 140°C ohne Lewissäuren und in einer 2. Reaktionsphase der 1. Stufe im Bereich von 160 bis 220°C in Gegenwart von Lewissäuren durchgeführt wird.

5. Verfahren nach Anspruch 2, dadurch gekennzeichnet, daß Lösungsmittel mit Siedepunkten im Bereich von 90 bis 200°C, bevorzugt 100 bis 180°C, besonders bevorzugt 105 bis 170°C eingesetzt werden.

6. Verfahren nach Anspruch 5, dadurch gekennzeichnet, daß ein Lösungsmittel oder Gemisch mehrerer aus der Gruppe von Methylcyclohexan, Isooctan, Isodecan, Isododecan, Isononan, Dimethylcyclohexan, Benzine, wie Leichtbenzin, Dicyclopentan, Decalin, Toluol, Cumol, Xylole, Mesitylen, Cymole, Chlorbenzol, Chlortoluol, Brombenzol, Dichlorbenzol, Chlorcumol, Ethylbenzol und Diethylbenzol eingesetzt wird.

7. Verfahren nach Anspruch 1, dadurch gekennzeichnet, daß als Lösungsmittel zur Durchführung der Hydrolyse in der 2. Stufe ein solches eingesetzt wird, wie es für die Entfernung des PCl₃ in der 1. Stufe verwendet wird.

8. Verfahren nach Anspruch 7, dadurch gekennzeichnet, daß in der 1. und 2. Stufe das selbe Lösungsmittel, bevorzugt Xylol, eingesetzt wird.

## Claims

1. Process for preparing 6-oxo-(6H)-dibenz-[c,e][1,2]-oxaphosphorins (ODOPs) of the formula 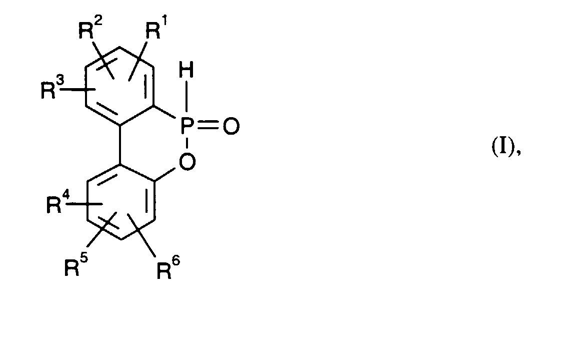 where
R¹ to R⁶ are identical or different and are hydrogen, halogen, C₁-C₄-alkyl or C₁-C₄-alkoxy,
by reaction of o-phenylphenols of the formula 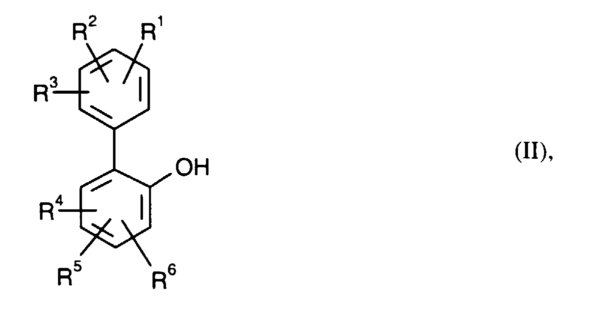 where
R¹ to R⁶ are as defined above,
with phosphorus trichloride in the presence of Lewis acids with elimination of hydrogen chloride at elevated temperature in the range from 70 to 220°C in a first stage and hydrolysis of the product of the first stage in a second stage, characterized in that during the entire reaction time of the first stage an amount of unreacted phosphorus trichloride of at least 0.05 mol per mol of o-phenylphenols used is maintained in the reaction mixture and the product of the first stage is, after removal of the excess PCl₃, reacted as melt or dissolved in an inert solvent with from 1 to 2, preferably from 1 to 1.7, particularly preferably from 1 to 1.5, mol of H₂O per chlorine equivalent of the product of the first stage at from 50 to 150°C, preferably at from 70 to 130°C, and HCl and residual H₂O are removed by heating to from 140 to 170°C.

2. Process according to Claim 1, characterized in that the excess PCl₃ is removed from the reaction mixture after completion of the first stage by distillation in the presence of an inert solvent having a boiling point higher than that of PCI₃ and lower than that of 6-chloro-(6H)-dibenz-[c,e][1,2]-oxaphosphorin.

3. Process according to Claim 1, characterized in that two of the radicals R¹ to R⁶ are hydrogen, in that preferably four of the radicals R¹ to R⁶ are hydrogen and in that particularly preferably all the radicals R¹ to R⁶ are hydrogen.

4. Process according to Claim 1, characterized in that the reaction is carried out in a first reaction phase of the first stage in the range from 70 to 140°C without Lewis acids and in a second reaction phase of the first stage in the range from 160 to 220°C in the presence of Lewis acids.

5. Process according to Claim 2, characterized in that solvents having boiling points in the range from 90 to 200°C, preferably from 100 to 180°C, particularly preferably from 105 to 170°C, are used.

6. Process according to Claim 5, characterized in that a solvent or a mixture of a plurality of solvents selected from the group consisting of methylcyclohexane, isooctane, isodecane, isododecane, isononane, dimethylcyclohexane, benzines such as petroleum ether, dicyclopentane, decalin, toluene, cumene, xylenes, mesitylene, cymenes, chlorobenzene, chlorotoluene, bromobenzene, dichlorobenzene, chlorocumene, ethylbenzene and diethylbenzene is used.

7. Process according to Claim 1, characterized in that the hydrolysis in the second stage is carried out using one of the solvents as are used for the removal of the PCl₃ in the first stage.

8. Process according to Claim 7, characterized in that the same solvent, preferably xylene, is used in the first and second stages.

## Revendications

1. Procédé de préparation de 6-oxo-(6H)-dibenz[c,e][1,2]oxaphosphorines de formule 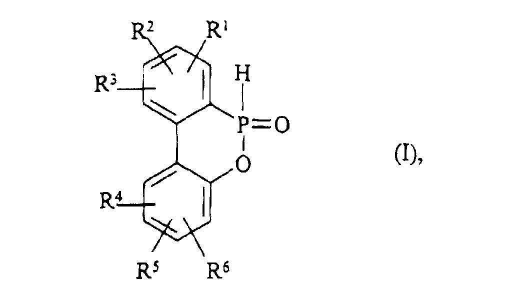 dans laquelle
R¹ à R⁶, ayant des significations identiques ou différentes, représentent chacun l'hydrogène, un halogène, un groupe alkyle en C₁-C₄ ou alcoxy en C₁-C₄, par réaction d'o-phénylphénols de formule 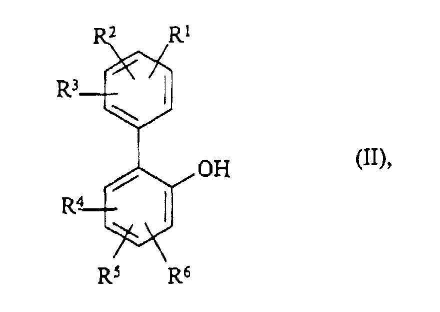 dans laquelle
R¹ à R⁶ ont les significations indiquées ci-dessus,
dans un premier stade opératoire avec le trichlorure de phosphore en présence d'acides de Lewis, avec élimination de chlorure d'hydrogène, à température élevée dans l'intervalle de 70 à 220°C, cette réaction étant suivie dans un deuxième stade opératoire de l'hydrolyse du produit obtenu, ce procédé se caractérisant en ce que, pendant toute la durée de réaction du premier stade, on maintient dans le mélange de réaction une quantité de trichloruTe de phosphore non converti représentant au Le A 30591 (95 113 970.8)
moins 0,05 mol par mole d'o-phénylphénol mis en oeuvre et on fait réagir le produit obtenu au premier stade, après élimination du PCl₃ en excès, à l'état fondu ou en solution dans un solvant inerte, avec 1 à 2, de préférence 1 à 1,7 et plus spécialement 1 à 1,5 mol d'eau par équivalent de chlore du produit du premier stade, à des températures de 50 à 150°C, de préférence de 70 à 130°C, après quoi on élimine l'HCl et les résidus d'humidité par chauffage à des températures allant jusqu'à 140-170°C.

2. Procédé selon la revendication 1, caractérisé en ce que, après le premier stade opératoire, on élimine l'excès de PCl₃ du mélange de réaction par distillation en présence d'un solvant inerte bouillant plus haut que PCl₃ et plus bas que la 6-chloro-(6H)-dibenz[c,e][1,2]oxaphosphorine.

3. Procédé selon la revendication 1, caractérisé en ce que deux des symboles R¹ à R⁶ représentent l'hydrogène, de préférence quatre des symboles R¹ à R⁶ représentent l'hydrogène et dans les meilleures conditions tous les symboles R¹ à R⁶ représentent l'hydrogène.

4. Procédé selon la revendication 1, caractérisé en ce que la réaction, dans une première phase de réaction du premier stade opératoire, est réalisée dans l'intervalle de 70 à 140°C en l'absence d'acides de Lewis et dans une deuxième phase de réaction du premier stade, dans l'intervalle de 160 à 220°C, en présence d'acides de Lewis.

5. Procédé selon la revendication 2, caractérisé en ce que l'on utilise des solvants bouillant dans l'intervalle de 90 à 200°C, de préférence de 100 à 180°C, et plus spécialement de 105 à 170°C.

6. Procédé selon la revendication 5, caractérisé en ce que l'on utilise un solvant ou mélange de plusieurs solvants du groupe consistant en le méthylcyclohexane, l'isooctane, l'isodécane, l'isododécane, l'isononane, le diméthylcyclohexane, les essences minérales telles que l'essence légère, le dicyclopentane, la décaline, le toluène, le cumène, les xylènes, le mésitylène, les cymènes, le chlorobenzène, le chlorotoluène, le bromobenzène, le dichlorobenzène, le chlorocumène, l'éthylbenzène et le diéthylbenzène.

7. Procédé selon la revendications 1, caractérisé en ce que pour l'hydrolyse du deuxième stade opératoire, on utilise le même solvant que celui qui a été utilisé pour éliminer le trichlorure de phosphore au premier stade.

8. Procédé selon la revendication 7, caractérisé en ce que, au premier et au deuxième stade opératoire, on utilise le même solvant, de préférence le xylène.
